Europäisches Patentamt

**European Patent Office**

Office européen des brevets

(11) Veröffentlichungsnummer: **0 166 850**

**A2**

(12) **EUROPÄISCHE PATENTANMELDUNG**

(21) Anmeldenummer: **85101481.1**

(22) Anmeldetag: **12.02.85**

(51) Int. Cl.⁴: **G 01 D 21/00**

(30) Priorität: **13.02.84 DE 3404999**

(43) Veröffentlichungstag der Anmeldung:
**08.01.86 Patentblatt 86/2**

(84) Benannte Vertragsstaaten:
**DE GB SE**

(71) Anmelder: **Licentia Patent-Verwaltungs-GmbH Theodor-Stern-Kai 1 D-6000 Frankfurt/Main 70(DE)**

(72) Erfinder: **Mahnke, Holger, Dipl.-Ing. Dahlenhöhe 7 D-2100 Hamburg 90(DE)**

(72) Erfinder: **Wilke, Konrad, Dr.-Ing. Wiesenweg 12 D-2107 Rosengarten 5(DE)**

(74) Vertreter: **Lertes, Kurt, Dr. et al, Licentia Patent-Verwaltungs-GmbH Theodor-Stern-Kai 1 D-6000 Frankfurt/M 70(DE)**

(54) **Verfahren zur Ermittlung der dynamischen Beanspruchung eines Schiffes.**

(57) Dynamische Beanspruchungen eines Schiffes durch von außen einwirkende Kräfte können mittels Meßwertgebern, die über den Schiffskörper verteilt angeordnet sind, ermittelt werden. Um der Schiffsführung von neuartigen, großen und bewegungsarmen Schiffen die Beanspruchungen sichtbar zu machen und wirksame Entscheidungshilfen zu geben, werden die Meßwerte on line auf eine Auswerteeinheit (19 bis 24) geführt und dort verknüpft. Damit können Daten für bestimmte Schiffsbereiche ermittelt werden. Die Ausgangssignale der Auswerteeinheit (19 bis 24) werden graphisch in Form von Balkendarstellungen (1, 4, 7, 10, 13, 16) und Zeitverläufen wiedergegeben. Aus ihnen ist der Trend und Trendvorhersage und aus der Kombination aktueller Meßwerte sowie einer Simulation von seegangskennzeichnenden Größen die Entscheidungshilfe für die Schiffsführung ableitbar.

0166850

Licentia Patent-Verwaltungs-GmbH                    PTL-HH/Sa/bl
Theodor-Stern-Kai 1                                 HH 83/23
D-6000 Frankfurt 70

"Verfahren zur Ermittlung der dynamischen Beanspruchung eines Schiffes"

Die Erfindung betrifft ein Verfahren nach dem Oberbegriff des Anspruchs 1.

Schon zur Zeit der Segelschiffe war der wirtschaftliche Erfolg einer Reise von der Kenntnis der Schiffsbeanspruchung in Wind und Wellen stark beeinflußt. Kurs und Besegelung mußten von der Schiffsführung so gewählt werden, daß der Vortrieb möglichst groß war und die Beanspruchung des Schiffes und der Besegelung möglichst ertragbar blieb.

Bei den heutigen, neuartigen und größeren Schiffen ist die Gefährdung im Seegang geblieben und von Menschen noch schwerer einschätzbar. Insbesondere bei den großen bewegungsarmen Schiffen sind die Beanspruchungen nicht direkt spürbar. Die Schiffsführung wird auch durch Erweiterung ihres Aufgabenbereiches von der Aufmerksamkeit für das Seeverhalten abgelenkt.

- 2 -

Weiterhin wird ein optimaler Treibstoffverbrauch insbesondere bei größeren Schiffen dann erzielt, wenn durch eine Füllungsregelung eine Geschwindigkeit so lange wie möglich beibehalten wird. Neuartige Schiffstypen mit entsprechend ausgetüftelten Konstruktionen sind in ihrem Seeverhalten nicht so beurteilbar, daß die Schiffsführung mit Sicherheit die richtigen Entscheidungen fällen kann. An die Schiffsführung werden einander widersprechende Forderungen gestellt, nämlich einerseits die Ankunftszeit des Schiffes einzuhalten und den Treibstoffverbrauch zu minimieren und andererseits Schäden an Schiff und Ladung weitgehend zu vermeiden. Bei neuen Schiffen werden daher häufig auftretende Gefährdungen überschätzt und die Fahrgeschwindigkeit reduziert. Die Zeitverluste müssen dann bei besserem Wetter durch erhöhte Geschwindigkeit und damit überproportionalem Leistungsbedarf ausgeglichen werden.

Aus einer Reihe von Untersuchungen, insbesondere in Norwegen und den USA, wurde ein sogenanntes Seegangswarngerät entwickelt, welches zusammen mit einer landgestützten Routenberatung die Einschätzung der Gefährdung erleichtern und nach Möglichkeit Entscheidungshilfen für die Wahl von Kurs und Geschwindigkeit geben sollte, um optimale Reiseleistungen zu erzielen (vergl. Beitrag von K. Lindemann, J. Odland, J. Strengehagen "On the application of hull surveillance systems for increased safety and improved structural utilization in rough weather", Zeitschrift SNAME, Annual Meeting, 1977, Paper 3). Diese Geräte konnten sich trotz erkennbarer Vorteile nicht durchsetzen, weil der Treibstoffmehrbedarf im Seegang nicht berücksichtigt wurde.

Es ist daher Aufgabe der Erfindung, ein Verfahren anzugeben, mit dem die Schiffsbeanspruchung sichtbar gemacht und der Schiffsführung eine wirksame Entscheidungshilfe gegeben wird.

Zur Lösung dieser Aufgabe dienen die im Kennzeichen des Anspruchs 1 angegebenen Merkmale.

Mit dem Verfahren nach der Erfindung werden umfangreiche Informationen gewonnen und verarbeitet, die es der Schiffsführung ermöglichen, nicht nur aktuelle Beanspruchungen sondern auch aus dem "geschichtlichen" Bild den Trend zu erkennen.

Weiterbildungen der Erfindung sind in den Unteransprüchen gekennzeichnet.

In der Zeichnung ist eine Anordnung zur Durchführung des Verfahrens nach der Erfindung dargestellt. Es zeigt

Fig. 1 eine Anordnung der Meßwertgeber,

Fig. 2 ein Funktionsschaubild und

Fig. 3 ein Schaubild über den Einfluß des Seegangs auf die Schiffsgeschwindigkeit.

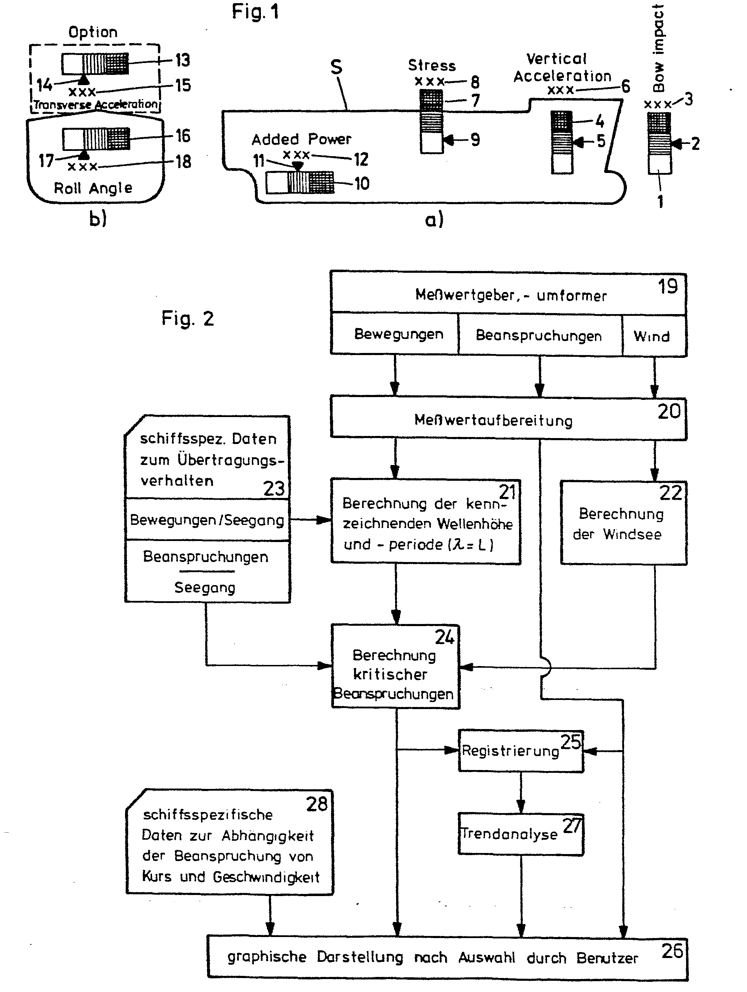

Bei einem in Fig. 1 gezeigten Schiff S soll mit möglichst geringem Aufwand die Vielzahl der möglichen Gefährdungen zuverlässig angezeigt werden. Die Gefährdungen können durch Auswertung von Beanspruchungen deutlich gemacht werden. Dabei müssen die einzelnen Abschnitte betrachtet werden. Mit wenigen Gebern, verteilt über das Schiff S, werden vorzugsweise die Grundinformationen bestimmt, die u.a. aus den lang- und kurzwelligen Komponenten des erregenden Seegangs ableitbar sind.

Die kurzwelligen Komponenten können vom Wind abgeleitet werden. Damit könnte der Unterschied zwischen Dünung und Windsee erfaßt werden. Letztere beinhaltet vorz. kurze Wellen, die in Überlagerung mit den langen Wellen maßgebend für die Stöße auf das Vorschiff sind.

In Fig. 1a ist im Bugbereich des Schiffes S ein Meßwertgeber vorgesehen, der diese Stöße erfaßt. Mittels mathematischer Algorithmen werden die Meßwerte in einen kennzeichnenden Wert umgeformt und in einem Balkendiagramm 1 mit Hilfe eines Zeigers 2 angezeigt. Über oder neben dem

Zeiger wird zusätzlich der entsprechende digitale Meßwert 3 angegeben. Ein weiterer Meßwertgeber im Vorschiff erfaßt die vertikale Beschleunigung, die die kombinierte Wirkung von Stampfen und Tauchen wiedergibt und die Gefährdung der Ladung im Vorschiff bzw. des Vorschiffes selbst direkt anzeigt. Der Meßwert ist wiederum in einem Balkendiagramm 4 mit drei Gefährdungsbereichen mittels eines Zeigers 5 als analoger Wert ablesbar. Über oder neben dem Zeiger 3 wird zusätzlich der digitale Meßwert 6 angegeben.

Ein anderer Meßwertgeber mit einem gleich ausgebildeten Balkendiagramm 7 kann mittschiffs zur Erfassung der Dehnung installiert sein. Der digitale Meßwert 8 ist neben oder über dem Zeiger 9 ablesbar. Die Meßwertgeber können backbord oder steuerbord angebracht sein.

Die Wirtschaftlichkeit eines Schiffes wird wesentlich durch den erhöhten Treibstoffverbrauch im Seegang beeinträchtigt. Weitere Meßwertgeber an der Hauptmaschine für das Drehmoment und für die Drehzahl des Propellers liefern angenähert den Treibstoffverbrauch. Auf modernen Schiffen sind diese Größen bereits als Anzeigen auf der Brücke vorhanden. Gemäß Fig. 1a wird im Balkendiagramm 10 mit Zeiger 11 und digitaler Anzeige 12 der Leistungsmehrbedarf im Seegang angegeben. Das heißt, es wird der Schiffsführung eine Information über den aktuellen Anteil des Seeganges am Leistungsbedarf gegeben.

Aus Fig. 1b sind beisp. weitere Meßwertgeber, bevorzugt am Brückenfrontschott, ersichtlich, von denen einer mit Balkendiagramm 13 mit Zeiger 14 und Digitalanzeige 15 für den Rollwinkel bestimmt ist und ein anderer mit Balkendiagramm 16 mit Zeiger 17 und Anzeige 18 die Querbeschleunigung feststellt. Der Meßwertgeber für den Rollwinkel kann auch durch mathematische Berechnung, beisp. aus der Querbeschleunigung ersetzt werden. Diese Meßwerte sind maßgebend für die Belastung der Zurreinrichtung in der Schiffsquerrichtung und für das Wohlbefinden der Besatzung.

Weitere Meßwertgeber können vorgesehen werden, z.B. zur Windmessung, für die Längsbeschleunigung u.a. Im allgemeinen gilt jedoch, die Zahl der Meßwertgeber so gering wie möglich zu halten, um das Verfahren kostengünstig zu realisieren. Nach Möglichkeit sollen die an Bord für andere Zwecke installierten Meßwertgeber für das Verfahren mitverwendet werden.

Die oben skizzierten Meßwerte werden gemäß dem Funktionsbild nach Fig. 2 verarbeitet und graphisch dargestellt. Die Meßwerte aus den Meßwertgebern, die die Bewegung und Beanspruchung des Schiffes und die Windwerte messen, werden in Block 19 zusammengefaßt. Diese Signale werden zur Aufbereitung in einen Block 20 gegeben und anschließend in Blöcken 21 und 22 Wellenhöhe und -periode sowie die Windsee berechnet. Die Meßwertaufbereitung im Block 20 läßt sich vorzugsweise mittels Subprozessoren durchführen, die einem Leitprozessor untergeordnet sind. In diese Berechnung gehen aus Block 23 schiffsspezifische Daten ein. In einem weiteren Block 24 werden unter Hinzunahme der Signale aus den Blöcken 22 und 23 die für das Schiff kritischen Beanspruchungen berechnet. Die Signale aus Block 24 werden registriert (Block 25) und weiter an einen Block 26 zur graphischen Darstellung gegeben. In Block 25 werden außer den kritischen Beanspruchungen auch die aufbereiteten Meßwerte aus Block 20 aufgenommen. Aus der gemeinsamen Registrierung (Block 25) kann in Block 27 eine Trendanalyse erarbeitet und auch in Block 26 graphisch dargestellt werden. Ebenfalls zur Darstellung gelangen die schiffsspezifischen Daten aus einem Block 28 wie z.B. die Abhängigkeit der Beanspruchung von Kurs und Geschwindigkeit des Schiffes. Der Benutzer kann die von ihm gewünschte graphische Darstellung mittels Wahlschalter wählen.

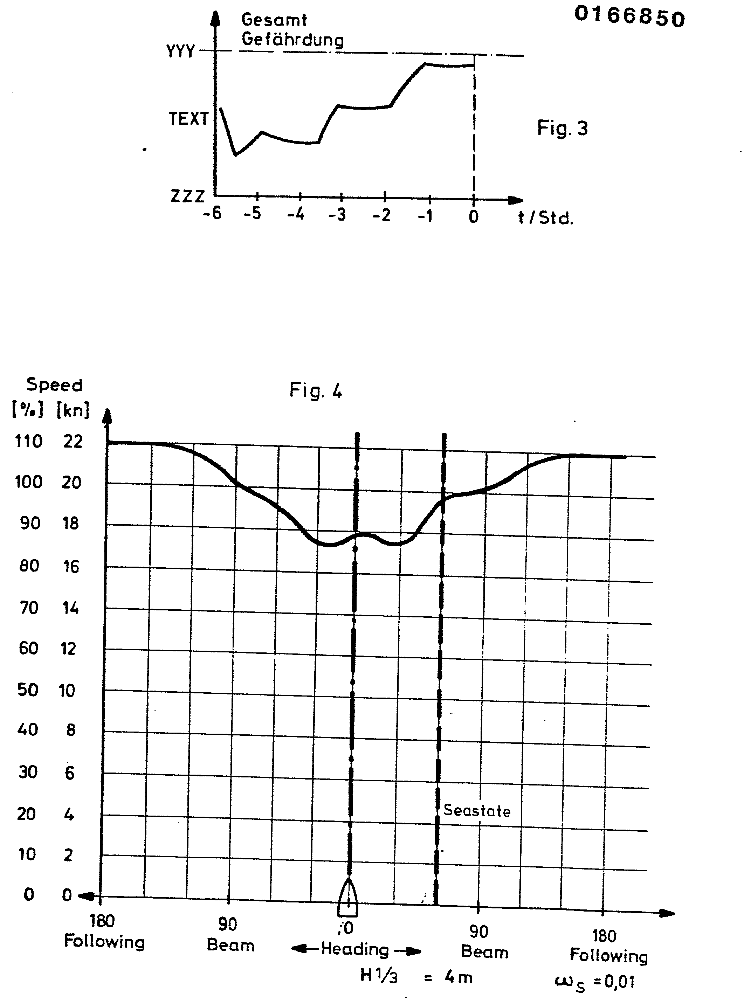

Eine im Block 26 wählbare Darstellung zeigt Fig. 3. Hierin ist über der Zeit t die Gefährdung aufgetragen, wie sie sich aus der Summe der Einzelgefährdungen ergibt. Die Gefährdung kann entweder in Prozent oder in Beschleunigungswerten (% oder g) angegeben werden. Der Wert YYY entspricht dabei dem Sollwert des jeweiligen Schiffes, der nicht überschritten werden sollte. ZZZ gibt einen unteren Wert an, der nicht notwendigerweise Null sein muß. Text bedeutet die Kennzeichnung der gerade dargestellten Meßwerte. Statt der Gesamtgefährdung kann der Benutzer nacheinander die zeitlichen Verläufe der norminierten Meßwerte dargestellt erhalten, um aus ihnen den Trend abschätzen zu können. Für die Darstellung des zeitlichen Windverlaufes (Richtung und Größe) wird vorteilhaft eine Polardarstellung gewählt.

Aus dem Kurvenzug der Gesamtgefährdung kann der Benutzer den zeitlichen Verlauf der Beanspruchungen während der letzen Stunden und die Entwicklung in den folgenden Stunden erhalten. Die Darstellung der Gefährdung kann sich aus folgenden Meßgrößen ergeben:

a) Beschleunigungen und Dehnungen,

b) Signifikante Roll- und Stampfbewegung,

c) Schiffsgeschwindigkeit, Kurs und Treibstoffverbrauch,

d) Mittelwerte für Windgeschwindigkeit und Windrichtung.

Eine weitere wählbare Darstellung ist in Fig. 4 wiedergegeben, die den Einfluß des Seeganges, gekennzeichnet durch $H_{1/3}$, $\omega_E$ und $\Delta\psi$, auf das Geschwindigkeitsverhalten eines speziellen Schiffes zeigt. Mit $H_{1/3}$ ist die kennzeichnende Wellenhöhe, mit $\omega_E$ die kennzeichnende Begegnungsperiode und mit $\Delta\psi$ der Begegnungswinkel von Schiff und Welle bezeichnet. Für die Darstellung ist ein karthesisches Koordinatensystem gewählt mit dem Kurswert auf der Abzisse und der Geschwindigkeit des Schiffes auf der Ordinate in Knoten bzw. Prozenten. Die Kurve wird aus spezifischen, vorher ermittelten Daten bestimmt und ermöglicht der Schiffsführung eine Bewertung des Seegangseinflusses auf die Geschwindigkeit. Bei einer Seegangsrichtung von 60°, die gestrichelt eingezeichnet ist, wird die Schiffsführung der Darstellung entnehmen können, daß mit einer Reduzierung der Schiffsgeschwindigkeit auf ca. 19 kn zu rechnen ist. Die stärkste

Fahrtherabsetzung wird sich bei einer Einfallsrichtung des Seegangs aus $30^o$ und einer kennzeichnenden Wellenhöhe von $H_{1/3} = 4$ m auf etwa 17 km ergeben. Die Werte $H_{1/3}$ und $\omega_e$ werden von Hand eingegeben.

0166850

Licentia Patent-Verwaltungs-GmbH          PTL-HH/Sa/bl
Theodor-Stern-Kai 1                        HH 83/25
D-6000 Frankfurt 70


Patentansprüche


1. Verfahren zur Ermittlung der dynamischen Beanspruchung eines Schiffes durch von außen einwirkende Kräfte unter Verwendung von über den Schiffskörper verteilt angeordnete Meßwertgeber, dadurch gekennzeichnet, daß die Meßwerte on line auf eine Auswerteeinheit (19 bis 24) geführt und dort verknüpft werden, daß durch Verknüpfung einzelner Werte unter Berücksichtigung der Schiffskonstruktion Daten für bestimmte Schiffsbereiche ermittelt werden, daß die Ausgangssignale der Auswerteeinheit und die aus der Verknüpfung gewonnenen Daten graphisch in Form von Balkendarstellungen und Zeitverläufen wiedergegeben werden, daß einzelne Werte in Kurvenform zur Sichtbarmachung eines Trends und zur Gewinnung einer Trendvorhersage gespeichert werden, und daß aus der Kombination aktueller Meßwerte und einer Simulation von seegangskennzeichnenden Größen Daten als Entscheidungshilfe für die Schiffsführung abgeleitet werden.

2. Verfahren nach Anspruch 1, dadurch gekennzeichnet, daß die Meßwerte als analoge Größen mittels Zeiger an Balkendiagrammen mit unterschiedlichen Gefährdungsbereichen angegeben werden.

3. Verfahren nach Anspruch 2, dadurch gekennzeichnet, daß über oder neben dem Zeiger der dem analogen Wert entsprechende digitale Meßwert angezeigt wird.

4. Verfahren nach Anspruch 1, dadurch gekennzeichnet, daß die aus den Meßwerten gewonnenen und bewerteten Einzelgefährdungen gleichzeitig in einem Monitorbild zu einer Gesamtgefährdung summiert und dargestellt werden.

5. Verfahren nach Anspruch 1, dadurch gekennzeichnet, daß durch Anwahl die zeitlichen Verläufe der norminierten Balkenwerte dargestellt werden.

Fig. 1

Option

13
14
15
Transverse Acceleration

16
17
18

Roll Angle

b)

S

Stress
×××  8
7
9

Added Power
11  ×××  12
10

Vertical
Acceleration
×××  6
4
5

Bow impact
×××  3
2
1

a)

Fig. 2

| Meßwertgeber,- umformer | | 19 |
|---|---|---|
| Bewegungen | Beanspruchungen | Wind |

Meßwertaufbereitung 20

schiffsspez. Daten zum Übertragungsverhalten 23

Bewegungen / Seegang

Beanspruchungen
——————
Seegang

Berechnung der kennzeichnenden Wellenhöhe und - periode ($\lambda = L$) 21

Berechnung der Windsee 22

Berechnung kritischer Beanspruchungen 24

Registrierung 25

schiffsspezifische Daten zur Abhängigkeit der Beanspruchung von Kurs und Geschwindigkeit 28

Trendanalyse 27

graphische Darstellung nach Auswahl durch Benutzer 26

0166850

**Gesamt Gefährdung**

YYY

TEXT

ZZZ

-6  -5  -4  -3  -2  -1  0    t / Std.

Fig. 3

Fig. 4

Speed
[%]  [kn]

110  22
100  20
90  18
80  16
70  14
60  12
50  10
40  8
30  6
20  4
10  2
0  0

Seastate

180        90        0        90        180
Following   Beam    ← Heading →   Beam   Following

H⅓  = 4m        $\omega_S = 0,01$